# EUROPÄISCHE PATENTSCHRIFT

(11) **EP 4 595 405 B1**
(45) Veröffentlichungstag und Bekanntmachung des Hinweises auf die Patenterteilung: **13.05.2026**
(21) Anmeldenummer: 23777155.5
(22) Anmeldetag: 15.09.2023
(51) Int. Cl.: H04L 47/72, H04L 47/80, H04L 47/783, G06F 9/455

(54) **VERFAHREN UND SYSTEM ZUR ÜBERMITTLUNG ZEITKRITISCHER DATEN INNERHALB EINES KOMMUNIKATIONSNETZES**
METHOD AND SYSTEM FOR TRANSMITTING TIME-CRITICAL DATA WITHIN A COMMUNICATION NETWORK
PROCÉDÉ ET SYSTÈME DE TRANSMISSION DE DONNÉES TEMPORELLEMENT CRITIQUES DANS UN RÉSEAU DE COMMUNICATION

(30) Priorität: 30.09.2022 EP 22199091
(43) Veröffentlichungstag der Anmeldung: 06.08.2025
(73) Patentinhaber: Siemens Aktiengesellschaft, 80333 München (DE)
(72) Erfinder: ALBRECHT, Harald, 90475 Nürnberg (DE); HÖME, Stephan, 91126 Schwabach (DE)
(74) Vertreter: Siemens Patent Attorneys
(86) Internationale Anmeldenummer: PCT/EP2023/075378
(87) Internationale Veröffentlichungsnummer: WO 2024/068303

(56) Entgegenhaltungen:
- US-A1- 2022 263 770
- HUAILIANG TAN ET AL: "DMVL: An I/O bandwidth dynamic allocation method for virtual networks", JOURNAL OF NETWORK AND COMPUTER APPLICATIONS, vol. 39, 1 March 2014 (2014-03-01), US, pages 104 - 116, XP055551577, ISSN: 1084-8045, DOI: 10.1016/j.jnca.2013.05.010
- LOVELESS TIM: "WHAT IS SR-IOV AND WHY IS IT IMPORTANT FOR EMBEDDED DEVICES? BENEFITS OF VIRTUALIZATION FOR DATA CENTERS", 7 October 2019 (2019-10-07), XP093024663, Retrieved from the Internet <URL:https://www.lynx.com/embedded-systems-learning-center/what-is-sr-iov-and-why-is-it-important-for-embedded-devices#:~:text=Single%20Root%20I%2FO%20Virtualization,virtual%20NICs%20to%20a%20hypervisor.> [retrieved on 20230216]
- "Egress DMA prioritization for IO Virtualized Adapters ED - Darl Kuhn", IP.COM, IP.COM INC., WEST HENRIETTA, NY, US, 18 November 2011 (2011-11-18), XP013148080, ISSN: 1533-0001

## Beschreibung

Die vorliegende Erfindung betrifft ein Verfahren zur Übermittlung zeitkritischer Daten innerhalb eines Kommunikationsnetzes, insbesondere innerhalb eines Kommunikationsnetzes eines industriellen Automatisierungssystems, und ein System, insbesondere einen Host, zur Durchführung dieses Verfahrens.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

WO 2022/042905 A1 betrifft ein Verfahren zur Bereitstellung von zeitkritischen Diensten, denen jeweils zumindest eine Server-Komponente zugeordnet ist, die durch eine in eine Ablaufsteuerungsumgebung ladbare und dort ausführbare Ablaufsteuerungskomponente gebildet wird. Für die Server-Komponenten wird jeweils eine Funktionseinheit zur Verarbeitung eines Kommunikationsprotokollstapels verfügbar gemacht, die mit einer der Ablaufsteuerungsumgebung zugeordneten Funktionseinheit zur Verarbeitung eines Kommunikationsprotokollstapels verbunden ist. Die Dienste umfassen jeweils eine Verzeichnisdienst-Komponente zur Ermittlung mittels der Ablaufsteuerungsumgebung bereitgestellter Dienste. Die Verzeichnisdienst-Komponenten werden miteinander über eine separierte Kommunikationsschnittstelle verbunden. Mit der separierten Kommunikationsschnittstelle ist eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht.

In EP 3 975 502 A1 ist ein Verfahren zur Bereitstellung von zeitkritischen Diensten mittels einer Ablaufsteuerungsumgebung beschrieben, bei dem für jeden Dienst jeweils zumindest eine Server-Komponente vorgesehen ist, die durch eine in die Ablaufsteuerungsumgebung ladbare und dort ausführbare Ablaufsteuerungskomponente gebildet wird. Eine Konfigurationseinheit für zumindest eine Gateway-Komponente eines die Ablaufsteuerungsumgebung umfassenden Teilnetzes ermittelt jeweils zu innerhalb des Teilnetzes gültigen Adressierungsinformationen der Server-Komponenten zugeordnete global gültige Zugangsinformationen. In Abhängigkeit von einem mittels der Konfigurationseinheit vorgegebenen Betriebsmodus werden eine oder mehrere parallel bzw. seriell verbundene Gateway-Komponenten verwendet. Die zumindest eine Gateway-Komponente leitet Dienstzugriffsanfragen entsprechend Weiterleitungs- bzw. Filterregeln, welche die Zugangsinformationen abbilden, und dem Betriebsmodus an die Server-Komponenten weiter.

Aus der älteren europäischen Patentanmeldung mit dem Anmeldeaktenzeichen 22177736.0 ist ein Verfahren zur Bereitstellung von Steuerungsanwendungen mittels Ablaufsteuerungskomponenten für Steuerungsanwendungen bekannt, deren Ausführung ausgewählte Privilegien erfordert. Hierzu wird jeweils eine Spezifikation benötigter sicherheitskritischer Ressourcen erstellt. Anhand der Spezifikationen wird jeweils eine zusätzliche Ablaufsteuerungskomponente ermittelt, die für eine Bereitstellung eines Zugriffs auf die benötigten sicherheitskritischen Ressourcen vorgesehen ist. Dementsprechend wird eine Ausführung der jeweiligen Ablaufsteuerungskomponente gemeinsam mit der zusätzlichen Ablaufsteuerungskomponente gestartet. Durch eine Ablaufsteuerungsumgebung wird eine Schnittstelle zur Interprozesskommunikation zwischen der jeweiligen Ablaufsteuerungskomponente und der zusätzlichen Ablaufsteuerungskomponente eingerichtet. Der Zugriff auf die jeweils benötigten sicherheitskritischen Ressourcen wird mittels Interprozesskommunikation zwischen der jeweiligen Ablaufsteuerungskomponente und der zusätzlichen Ablaufsteuerungskomponente bereitgestellt.

US 2022/263770 A1 betrifft ein Verfahren zur Übermittlung zeitkritischer Daten innerhalb eines Kommunikationsnetzes, bei dem die zeitkritischen Daten von bzw. zu Steuerungsanwendungen übermittelt werden, die jeweils mittels eines Containers bereitgestellt werden. Zur Reservierung von Ressourcen zum Senden bzw. Empfangen von zeitkritische Daten umfassenden Datenströmen senden die Container jeweils einen Reservierungsauftrag an ein Reservierungsmodul, das einem Hypervisor zugeordnet ist.

Aufgrund einer zunehmend flexibleren funktionalen Ausgestaltung von industriellen Automatisierungsgeräten werden verstärkt in Automatisierungsgeräte nachladbare Steuerungsanwendungen genutzt. Diese Steuerungsanwendungen können beispielsweise mittels Container-Virtualisierung verfügbar gemacht werden. In industriellen Automatisierungssystem bestehen üblicherweise hohe Anforderungen hinsichtlich deterministischer Kommunikation mit definierten Quality-of-Service-Eigenschaften einerseits und in Bezug auf eine aufwandsarme Integration industrieller Steuerungsanwendungen andererseits.

Bisherige Standards zu Time-sensitive Networks tragen mittels Container-Virtualisierung implementierte Steuerungsanwendungen nur wenig Rechnung. Zwar ist in IEC 60802 ein "Industrial Profile" mit technischen Komponenten für Time-sensitive Networks für industrielle Automatisierungssysteme definiert. Jedoch werden mittels Container-Virtualisierung implementierte Steuerungsanwendungen dort weitgehend mit virtuellen Maschinen gleichgesetzt und Software-Container daher wie physikalische Endgeräte behandelt. Dies hat für Entwickler von mittels Container-Virtualisierung implementierten Steuerungsanwendungen zur Folge, dass komplexe Endgeräte-Software-Stacks in ihre Anwendungen integriert werden müssen. Hieraus resultieren wiederum hohe Kosten sowie Inbetriebnahme- und Wartungsaufwände.

Der vorliegenden Erfindung liegt daher die Aufgabe zugrunde, ein Verfahren zur Übermittlung zeitkritischer Daten innerhalb eines Kommunikationsnetzes zu schaffen, das auf Basis von Container-Virtualisierung eine aufwandsarme und zuverlässige Realisierung von Steuerungsanwendungen mit deterministischem Kommunikationseigenschaften ermöglicht, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 14 angegebenen Merkmalen gelöst. Vorteilhafte Weiterbildungen sind in den abhängigen Ansprüchen angegeben.

Entsprechend dem erfindungsgemäßen Verfahren zur Übermittlung zeitkritischer Daten innerhalb eines Kommunikationsnetzes werden die zeitkritischen Daten von bzw. zu Steuerungsanwendungen übermittelt, die jeweils mittels zumindest einer Ablaufsteuerungskomponente bereitgestellt werden, die in eine auf einem Host installierte Ablaufsteuerungsumgebung ladbar und dort ausführbar ist. Dabei wird den Ablaufsteuerungskomponenten jeweils zumindest ein virtueller Netzadapter zugeordnet.

Vorzugsweise laufen die Ablaufsteuerungskomponenten innerhalb der Ablaufsteuerungsumgebung isoliert voneinander ab und nutzen gemeinsam einen Betriebssystemkern des Hosts. Insbesondere können die Ablaufsteuerungskomponenten Software-Container, WebAssembly- oder Java Bytecode sein bzw. umfassen. Darüber hinaus können die Ablaufsteuerungskomponenten auch Container-Gruppen umfassen, beispielsweise Pods. Grundsätzlich können für die Ablaufsteuerungskomponenten auch alternative Micro-Virtualisierungskonzepte, wie Snaps, verwendet werden. Speicherabbilder für Software-Container können beispielsweise aus einem durch eine Vielzahl von Nutzern lesend bzw. schreibend zugreifbaren Speicher- und Bereitstellungssystem abgerufen werden.

Die Ablaufsteuerungsumgebung kann insbesondere eine Container-Laufzeitumgebung bzw. Container-Engine sein, durch die ein Anlegen, Löschen bzw. Verknüpfen von virtuellen Ressourcen erfolgt. Dabei umfassen die virtuellen Ressourcen Software-Container, virtuelle Kommunikationsnetze und diesen zugeordnete Verbindungen. Beispielsweise kann die Ablaufsteuerungsumgebung eine Docker Engine oder einen Snap Core umfassen, die bzw. der auf einer Server-Einrichtung abläuft. Grundsätzlich können auch andere (orchestrierte) Container-Laufzeitumgebungen, wie podman oder Kubernetes, verwendet werden. Alternativ zu einer Container-Laufzeitumgebung kann für die Ablaufsteuerungsumgebung auch eine WebAssembly-Laufzeitumgebung oder eine Java Virtual Machine verwendet werden.

Den virtuellen Netzadaptern werden erfindungsgemäß durch eine Queue-Steuerungseinheit dynamisch Sende-/Empfangsqueues zumindest eines physischen Netzadapters des Hosts zugeordnet. Dabei umfasst der physische Netzadapter insbesondere eine PHY- und MAC-Komponente. Vorzugsweise werden den Ablaufsteuerungskomponenten die virtuellen Netzadapter durch die Queue-Steuerungseinheit jeweils innerhalb der Ablaufsteuerungsumgebung zugeordnet.

Die Ablaufsteuerungskomponenten senden zur Reservierung von Ressourcen zum Senden bzw. Empfangen von zeitkritische Daten umfassenden Datenströmen jeweils einen Reservierungsauftrag an ein der Ablaufsteuerungsumgebung zugeordnetes Reservierungsmodul. Das Reservierungsmodul sendet anhand den Ablaufsteuerungskomponenten zugeordneter Dienstgüteanforderungen jeweils eine Reservierungsanfrage oder -bestätigung an den jeweiligen Datenstrom weiterleitende Kommunikationsgeräte oder eine übergeordnete Steuerungseinheit des Kommunikationsnetzes zur Reservierung der Ressourcen.

Die Ressourcen zur Übermittlung der Datenströme umfassen insbesondere nutzbare Übertragungszeitfenster, Bandbreite, zugesicherte maximale Latenz, Queue-Anzahl, Queue-Cache bzw. Adress-Cache in Switches oder Bridges als weiterleitenden Kommunikationsgeräten. Eine Weiterleitung der Datenströme innerhalb des Kommunikationsnetzes wird beispielsweise mittels Frame Preemption, insbesondere gemäß IEEE 802.1Q, mittels Time-Aware Shaper, insbesondere gemäß IEEE 802.1Q, mittels Credit-Based Shaper, insbesondere gemäß IEEE 802.1Q, mittels Burst Limiting Shaper, mittels Peristaltic Shaper und/oder mittels Priority-Based Shaper gesteuert. Genannte Standards sind zur Implementierung von Time-sensitive Networks (TSN) spezifiziert.

Die Reservierungsanfrage oder -bestätigung kann insbesondere eine Talker Advertise, Talker Announce, Listener Ready oder Listener Join Nachricht sein. Außerdem werden die Dienstgüteanforderungen den Ablaufsteuerungskomponenten vorteilhafterweise jeweils anhand einer Klassifizierung ihrer jeweiligen Echtzeitanforderung zugeordnet. Dabei erfolgt die Klassifizierung der Ablaufsteuerungskomponenten beispielsweise auf Grundlage einer Klassifizierungsrichtlinie.

Das Reservierungsmodul die Queue-Steuerungseinheit veranlasst erfindungsgemäß, dem virtuellen Netzadapter der jeweiligen Ablaufsteuerungskomponente entsprechend einer den Dienstgüteanforderungen zugeordneten Priorität Zugriff auf die Sende-/ Empfangsqueues des physischen Netzadapters einzuräumen. Vorzugsweise werden die Ressourcen zur Übermittlung der Datenströme bei ausreichender Verfügbarkeit in den jeweiligen weiterleitenden Kommunikationsgeräten reserviert. Insbesondere veranlasst das Reservierungsmodul die Queue-Steuerungseinheit nur bei erfolgreicher Reservierung, dem virtuellen Netzadapter der jeweiligen Ablaufsteuerungskomponente Zugriff auf die Sende-/Empfangsqueues des physischen Netzadapters einzuräumen.

Mit der vorliegenden Erfindung entfällt eine Integration und Pflege von Software-Stacks insbesondere für Time-sensitive Networks in Container-basierte Steuerungsanwendungen. Durch das Reservierungsmodul und die Queue-Steuerungseinheit werden nämlich innerhalb der Ablaufsteuerungsumgebung für Container-basierte Steuerungsanwendungen einfach nutzbare Anwendungsschnittstellen bereitgestellt. Insgesamt ermöglicht dies eine einfache Verwendung von Hosts mit entsprechend virtualisierten Steuerungsanwendungen in Time-sensitive Networks und eine transparente Unterstützung unterschiedlicher Hardware-Konfigurationen je nach Leistungsanforderungen an das jeweilige Time-sensitive Network.

Datenströme sendende Kommunikationsgeräte bzw. Steuerungsanwendungen senden zur Bekanntmachung abonnierbarer Datenströme erfindungsgemäß jeweils einen Datenstrom-Identifikator umfassende erste Datagramme und spezifizieren in den ersten Datagrammen Dienstgüteanforderungen kennzeichnende Dienstgüteparameter für den jeweiligen Datenstrom. Demgegenüber senden Datenströme empfangende Kommunikationsgeräte bzw. Steuerungsanwendungen zur Reservierung von durch weiterleitende Kommunikationsgeräte für eine Übermittlung der Datenströme bereitzustellenden Ressourcen jeweils zweite Datagramme und spezifizieren in diesen den jeweiligen Datenstrom-Identifikator. Auf die ersten und zweiten Datagramme reservieren die weiterleitenden Kommunikationsgeräte jeweils bei ausreichender Verfügbarkeit Ressourcen zur Übermittlung der Datenströme entsprechend den spezifizierten Dienstgüteparametern. Dabei wird die Verfügbarkeit durch die übergeordnete Steuerungseinheit des Kommunikationsnetzes bzw. die weiterleitenden Kommunikationsgeräte überprüft. Dies ermöglicht ein hohes Maß an Konformität zu stehenden Standards für Time-sensitive Networks.

Entsprechend einer bevorzugten Ausgestaltung der vorliegenden Erfindung sendet das Reservierungsmodul die Reservierungsanfragen oder -bestätigungen jeweils entsprechend einem für die jeweilige Ablaufsteuerungskomponente ausgewählten Reservierungsprotokoll an die weiterleitenden Kommunikationsgeräte oder die übergeordnete Steuerungseinheit des Kommunikationsnetzes. Dabei kann das Reservierungsmodul das Reservierungsprotokoll beispielsweise anhand durch ein weiterleitendes Kommunikationsgerät, an das der Host angeschlossen ist, insbesondere entsprechend IEEE 802.1Q bereitgestellter Informationen bzw. anhand durch die übergeordnete Steuerungseinheit des Kommunikationsnetzes bereitgestellter Informationen auswählen. Da das Reservierungsmodul diese Funktionen für die jeweilige Steuerungsanwendung übernimmt, ist seitens der Steuerungsanwendungen eine Berücksichtigung von Spezifika zur Auswahl eines geeigneten Reservierungsprotokolls nicht mehr erforderlich.

Entsprechend einer weiteren bevorzugten Ausgestaltung der vorliegenden Erfindung schaltet die Queue-Steuerungseinheit bei einer Einräumung des Zugriffs auf die Sende-/Empfangsqueues des physischen Netzadapters Host-interne Hardware- bzw. Software-Schnittstellen zwischen dem jeweiligen virtuellen Netzadapter und zumindest einer ausgewählten Sende-/Empfangsqueue frei. Auf diese Weise ist eine schnelle, zuverlässige und bedarfsgerechte Zuordnung der Sende-/Empfangsqueues gewährleitet. Dementsprechend kann die Queue-Steuerungseinheit bei der Einräumung des Zugriffs auf die Sende-/Empfangsqueues jeweils verfügbare Sende-/Empfangsqueues und Hardware- bzw. Software-Schnittstellen für die Ablaufsteuerungskomponenten zur Übermittlung der Datenströme reservieren.

Insbesondere konfiguriert die Queue-Steuerungseinheit den physischen Netzadapter, dass reservierte Sende-/Empfangsqueues an den zugeordneten virtuellen Netzadaptern der Ablaufsteuerungskomponenten mit der Priorität zur Verfügung stehen, die der jeweiligen Ablaufsteuerungskomponente zugeordnet ist. Somit wird eine konsistente Allokierung von Hostinternen Ressourcen zum Senden bzw. Empfangen von priorisierten Datenströmen durch die Ablaufsteuerungskomponenten erzielt.

Vorteilhafterweise teilt die Queue-Steuerungseinheit dem Reservierungsmodul nach einer erfolgreichen Konfiguration des physischen Netzadapters jeweils für die Übermittlung der Datenströme zu verwendende virtuelle Netzadapter und Sende-/ Empfangsqueues mit. Das Reservierungsmodul sendet diese Informationen zur Bestätigung des Reservierungsauftrags an die jeweilige Ablaufsteuerungskomponente. Anhand der von der Bestätigung ihres jeweiligen Reservierungsauftrags umfassten Informationen können die Ablaufsteuerungskomponenten jeweils einen Datenstrom-Zugriffspunkt insbesondere als Socket anlegen und die Datenströme gezielt über die jeweils zu verwendenden virtuellen Netzadapter und Sende-/Empfangsqueues senden bzw. empfangen. Dies ermöglicht eine einfache und sichere Einrichtung von Datenströmen für die Ablaufsteuerungskomponenten. Vorzugsweise werden die virtuellen Netzadapter zum Senden bzw. Empfangen der Datenströme den Ablaufsteuerungskomponenten durch die Queue-Steuerungseinheit bei Bedarf zugeordnet und jeweils mit einer Funktionseinheit zur Implementierung eines Netzwerkprotokoll-Stacks der jeweiligen Ablaufsteuerungskomponente verbunden. Somit können Host-interne Ressourcen besonders effizient genutzt werden.

Das erfindungsgemäße System ist zur Durchführung eines Verfahrens entsprechend vorangehenden Ausführungen vorgesehen und umfasst eine auf einem Host installierte Ablaufsteuerungsumgebung sowie zumindest eine Ablaufsteuerungskomponente zur Bereitstellung einer Steuerungsanwendung. Die Ablaufsteuerungskomponente ist in die Ablaufsteuerungsumgebung ladbar und dort ausführbar. Außerdem umfasst das System eine Queue-Steuerungseinheit und ein der Ablaufsteuerungsumgebung zugeordnetes Reservierungsmodul. Das System ist dafür eingerichtet, dass zeitkritischen Daten von bzw. zu der Steuerungsanwendung übermittelt werden und dass der Ablaufsteuerungskomponente zumindest ein virtueller Netzadapter zugeordnet wird.

Die die Queue-Steuerungseinheit des erfindungsgemäßen Systems ist dafür eingerichtet, virtuellen Netzadaptern dynamisch Sende-/Empfangsqueues zumindest eines physischen Netzadapters des Hosts zuzuordnen. Des Weiteren ist die Ablaufsteuerungskomponente dafür eingerichtet, zur Reservierung von Ressourcen zum Senden bzw. Empfangen von zeitkritische Daten umfassenden Datenströmen jeweils einen Reservierungsauftrag an das Reservierungsmodul zu senden. Das Reservierungsmodul ist demgegenüber dafür eingerichtet, anhand Ablaufsteuerungskomponenten zugeordneter Dienstgüteanforderungen jeweils eine Reservierungsanfrage oder -bestätigung an den jeweiligen Datenstrom weiterleitende Kommunikationsgeräte oder eine übergeordnete Steuerungseinheit eines Kommunikationsnetzes zur Reservierung der Ressourcen zu senden. Ferner ist das Reservierungsmodul dafür eingerichtet, die Queue-Steuerungseinheit zu veranlassen, dem virtuellen Netzadapter der jeweiligen Ablaufsteuerungskomponente entsprechend einer den Dienstgüteanforderungen zugeordneten Priorität Zugriff auf die Sende-/ Empfangsqueues des physischen Netzadapters einzuräumen.

Entsprechend einer vorteilhaften Ausgestaltung des erfindungsgemäßen Systems umfasst dieses ein Kommunikationsnetz mit mehreren Kommunikationsgeräten. Außerdem sind die Ablaufsteuerungskomponenten dafür eingerichtet, innerhalb der Ablaufsteuerungsumgebung isoliert voneinander abzulaufen und gemeinsam einen Betriebssystemkern des Hosts zu nutzen. Vorzugsweise ist die Queue-Steuerungseinheit dafür eingerichtet, den Ablaufsteuerungskomponenten die virtuellen Netzadapter jeweils innerhalb der Ablaufsteuerungsumgebung zuzuordnen. Schließlich ist das Kommunikationsnetz dafür eingerichtet, die Ressourcen zur Übermittlung der Datenströme bei ausreichender Verfügbarkeit in den jeweiligen weiterleitenden Kommunikationsgeräten zu reservieren. Insgesamt ermöglicht dies sowohl Host-intern als auch Kommunikationsnetz-weit eine konsistente Zuteilung von Ressourcen zum Senden bzw. Empfangen von Datenströmen durch Ablaufsteuerungskomponenten.

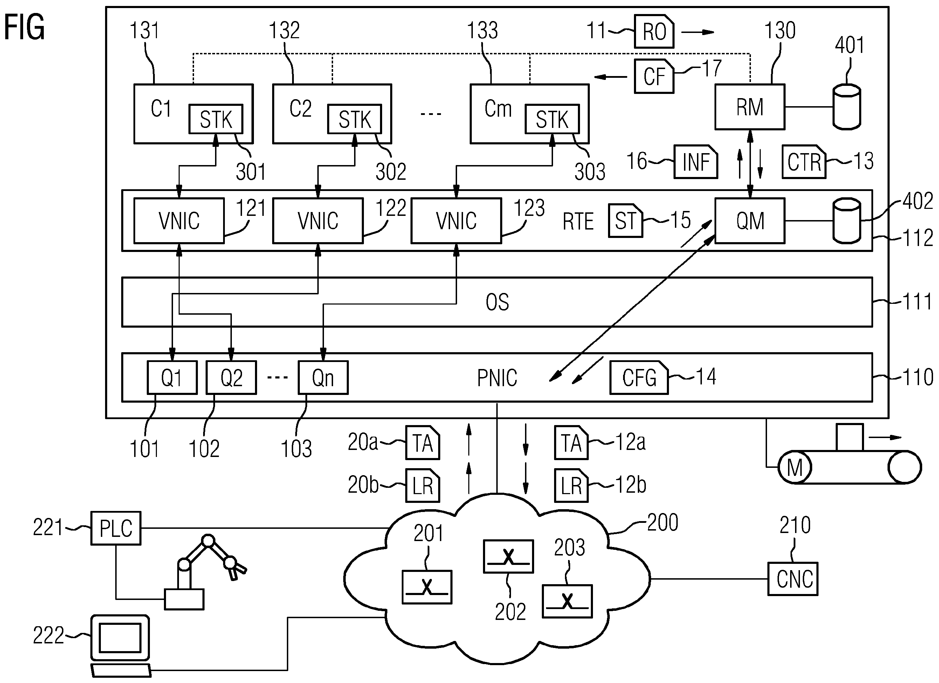

Die vorliegende Erfindung wird nachfolgend an einem Ausführungsbeispiel anhand der Zeichnung näher erläutert. Es zeigt die
- Figur: ein System zur Übermittlung zeitkritischer Daten innerhalb eines Kommunikationsnetzes von bzw. zu Steuerungsanwendungen, die mittels Ablaufsteuerungskomponenten bereitgestellt werden.

Das in der Figur dargestellte System umfasst einen Host 100 zur Bereitstellung von Steuerungsanwendungen eines industriellen Automatisierungssystems mittels Ablaufsteuerungskomponenten 131-133, die im vorliegenden Ausführungsbeispiel durch Software-Container implementiert sind. Die Steuerungsanwendungen des industriellen Automatisierungssystems sind exemplarisch für zeitkritische Dienste und können auch Überwachungsfunktionen umfassen. Darüber hinaus umfasst das System ein Kommunikationsnetz 200 mit mehreren Daten weiterleitenden Kommunikationsgeräten 201-203, insbesondere Switche, mehreren Endgeräten 221-222, beispielsweise speicherprogrammierbare Steuerungen oder Bedien- und Beobachtungsstationen, und einer übergeordneten Steuerungseinheit 210, wie einem Central Network Controller.

Der Host 100 kann mittels der Steuerungsanwendungen beispielsweise Funktionen von Steuerungsgeräten eines industriellen Automatisierungssystems, wie speicherprogrammierbaren Steuerungen, oder von Feldgeräten, wie Sensoren oder Aktoren, implementieren. Auf diese Weise kann der Host 100 insbesondere für einen Austausch von Steuerungs- und Messgrößen mit durch den Host 100 gesteuerten Maschinen oder Vorrichtungen genutzt werden. Dabei kann der Host 100 aus erfassten Messgrößen geeignete Steuerungsgrößen für die Maschinen oder Vorrichtungen ermitteln.

Alternativ oder zusätzlich kann der Host 100 mittels der Steuerungsanwendungen Funktionen einer Bedien- und Beobachtungsstation implementieren und somit zur Visualisierung von Prozessdaten bzw. Mess- und Steuerungsgrößen genutzt werden, die durch Automatisierungsgeräte verarbeitet bzw. erfasst werden. Insbesondere kann der Host 100 zur Anzeige von Werten eines Regelungskreises und zur Veränderung von Regelungsparametern oder -programmen verwendet werden.

Die den Steuerungsanwendungen zugeordneten Ablaufsteuerungskomponenten 131-133 sind in eine Ablaufsteuerungsumgebung 112 ladbare sowie dort ausführbar. Die Ablaufsteuerungsumgebung 112 wird mittels des Hosts 100 bereitgestellt und ist dort auf als Anwendung auf einem Betriebssystem 111 des Hosts 100 installiert. Im vorliegenden Ausführungsbeispiel sind bzw. umfassen die Ablaufsteuerungskomponenten 131-133 Software-Container, die jeweils von anderen Software-Containern, Container-Gruppen bzw. Pods isoliert innerhalb der Ablaufsteuerungsumgebung 112 ablaufen. Dabei nutzen die Software-Container jeweils gemeinsam mit anderen auf dem Host 100 ablaufenden Software-Containern einen Kernel des Betriebssystems 111 des Hosts 100. Die Ablaufsteuerungsumgebung 112 ist insbesondere eine Container-Engine, durch die ein Anlegen, Löschen bzw. Verknüpfen von virtuellen Ressourcen erfolgt. Dabei können die virtuellen Ressourcen Software-Container, virtuelle Kommunikationsnetze und diesen zugeordnete Verbindungen umfassen.

Eine Isolation der Ablaufsteuerungskomponenten bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für Software-Container können beispielsweise aus einem durch eine Vielzahl von Nutzern lesend bzw. schreibend zugreifbaren Speicher- und Bereitstellungssystem abgerufen werden.

Zur Übermittlung zeitkritischer Daten innerhalb des Kommunikationsnetzes 200, die von bzw. zu den Steuerungsanwendungen übermittelt werden, die mittels der Ablaufsteuerungskomponente 131-133 bereitgestellt werden, wird den Ablaufsteuerungskomponenten 131-133 durch eine Queue-Steuerungseinheit 120 jeweils ein virtueller Netzadapter 121-123 innerhalb der Ablaufsteuerungsumgebung 112 zugeordnet. Den virtuellen Netzadaptern 121-123 werden durch die Queue-Steuerungseinheit 120 wiederum dynamisch Sende-/Empfangsqueues 101-103 eines physischen Netzadapters 110 des Hosts 100 zugeordnet. Die virtuellen Netzadapter 121-123 können beispielsweise als Virtual Functions (VFs) im Rahmen von Single Root I/O Virtualization (SR-IOV) ausgeführt sein. Alternativ hierzu können die virtuellen Netzadapter 121-123 je nach Netzadapter-Hardware und gewählter Virtualisierungslösung auch als PCIe Scalable Functions oder Sub-functions (SFs) realisiert sein.

Die Ablaufsteuerungskomponenten 131-133 senden zur Reservierung von Ressourcen zum Senden bzw. Empfangen von zeitkritische Daten umfassenden Datenströmen (Streams) jeweils einen Reservierungsauftrag 11 an ein der Ablaufsteuerungsumgebung 112 zugeordnetes Reservierungsmodul 130. Die Ressourcen zur Übermittlung der Datenströme umfassen insbesondere nutzbare Übertragungszeitfenster, Bandbreite, zugesicherte maximale Latenz, Queue-Anzahl, Queue-Cache bzw. Adress-Cache in den Switchen 201-203 des Kommunikationsnetzes 200. Dabei kann eine Weiterleitung der Datenströme innerhalb des Kommunikationsnetzes 200 insbesondere mittels Frame Preemption gemäß IEEE 802.1Q, Time-Aware Shaper gemäß IEEE 802.1Q, Credit-Based Shaper gemäß IEEE 802.1Q, Burst Limiting Shaper, Peristaltic Shaper bzw. Priority-Based Shaper gesteuert werden.

Anhand den Ablaufsteuerungskomponenten 131-133 zugeordneter Dienstgüteanforderungen sendet das Reservierungsmodul 130 jeweils eine Reservierungsanfrage 12a oder Reservierungsbestätigung 12b an den jeweiligen Datenstrom weiterleitende Kommunikationsgeräte 201-203 oder die übergeordnete Steuerungseinheit 210 des Kommunikationsnetzes 200 zur Reservierung der Ressourcen. Im vorliegenden Ausführungsbeispiel werden den Ablaufsteuerungskomponenten 131-133 die Dienstgüteanforderungen jeweils anhand einer Klassifizierung ihrer jeweiligen Echtzeitanforderung zugeordnet. Diese Klassifizierung der Ablaufsteuerungskomponenten 131-133 erfolgt durch das Registrierungsmodul 130 auf Grundlage einer Klassifizierungsrichtlinie, die in einer dem Registrierungsmodul 130 zugeordneten Datenbank 401 hinterlegt ist.

Das Reservierungsmodul 130 sendet die Reservierungsanfragen 12a oder Reservierungsbestätigungen 12b jeweils entsprechend einem für die jeweilige Ablaufsteuerungskomponente 131-133 ausgewählten Reservierungsprotokoll an die weiterleitenden Kommunikationsgeräte 201-203 oder die übergeordnete Steuerungseinheit 210 des Kommunikationsnetzes. Vorzugsweise wählt das Reservierungsmodul 130 das Reservierungsprotokoll anhand durch ein weiterleitendes Kommunikationsgerät 201-203, an das der Host 100 angeschlossen ist, entsprechend IEEE 802.1Q bereitgestellter Informationen bzw. anhand durch die übergeordnete Steuerungseinheit 210 des Kommunikationsnetzes 200 bereitgestellter Informationen aus.

Im vorliegenden Ausführungsbeispiel senden Talker als Datenströme sendende Kommunikationsgeräte bzw. Steuerungsanwendungen zur Bekanntmachung abonnierbarer Datenströme jeweils einen Datenstrom-Identifikator umfassende Talker Advertise Nachrichten 12a, 20a und spezifizieren in diesen Nachrichten Dienstgüteanforderungen kennzeichnende Dienstgüteparameter für den jeweiligen Datenstrom. Demgegenüber senden Listener als Datenströme empfangende Kommunikationsgeräte bzw. Steuerungsanwendungen zur Reservierung von durch die weiterleitenden Kommunikationsgeräte 201-203 für eine Übermittlung der Datenströme bereitzustellenden Ressourcen jeweils Listener Ready Nachrichten 12b, 20b und spezifizieren in diesen Nachrichten den jeweiligen Datenstrom-Identifikator.

Die weiterleitenden Kommunikationsgeräte 201-203 reservieren auf die Talker Advertise Nachrichten 12a, 20a und die Listener Ready Nachrichten 12b, 20b jeweils bei ausreichender Verfügbarkeit Ressourcen zur Übermittlung der Datenströme entsprechend den spezifizierten Dienstgüteparametern. Dabei wird die Verfügbarkeit erforderlicher Ressourcen entlang für die Übermittlung der Datenströme in Frage kommender Pfade durch die übergeordnete Steuerungseinheit 210 des Kommunikationsnetzes bzw. die weiterleitenden Kommunikationsgeräte überprüft. Dies ist davon abhängig, ob ein zentrales oder dezentrales Stream-Reservierungsmodell verwendet wird. In jedem Fall ist das Kommunikationsnetz 200 dafür eingerichtet, die Ressourcen zur Übermittlung der Datenströme bei ausreichender Verfügbarkeit in den jeweiligen weiterleitenden Kommunikationsgeräten 201-203 zu reservieren.

Das Reservierungsmodul 130 veranlasst die Queue-Steuerungseinheit 120 mittels eines Steuerungsbefehls 13, dem virtuellen Netzadapter 121-123 der jeweiligen Ablaufsteuerungskomponente 131-133 entsprechend einer den Dienstgüteanforderungen zugeordneten Priorität Zugriff auf die Sende-/Empfangsqueues 101-103 des physischen Netzadapters 110 einzuräumen. Vorteilhafterweise veranlasst das Reservierungsmodul 130 die Queue-Steuerungseinheit 120 nur bei erfolgreicher Reservierung der Ressourcen im Kommunikationsnetz 200, dem virtuellen Netzadapter 121-123 der jeweiligen Ablaufsteuerungskomponente 131-133 Zugriff auf die Sende-/Empfangsqueues 101-103 des physischen Netzadapters 110 einzuräumen.

Die Queue-Steuerungseinheit 120 schaltet bei einer Einräumung des Zugriffs auf die Sende-/Empfangsqueues 101-103 des physischen Netzadapters 110 Host-interne Hardware- bzw. Software-Schnittstellen 501-503 zwischen dem jeweiligen virtuellen Netzadapter 121-123 und zumindest einer ausgewählten Sende-/ Empfangsqueue 101-103 frei. Zum Auswählen einer Sende-/Empfangsqueue 101-103 und Freischalten der Hardware- bzw. Software-Schnittstellen 501-503 erfasst die Queue-Steuerungseinheit bereits für eine Übermittlung von Datenströmen verwendete virtuelle Netzadapter 121-123 und freigeschaltete Hardware- bzw. Software-Schnittstellen 501-503. Dies protokolliert die Queue-Steuerungseinheit 120 in einer zugeordneten Datenbank 402. In dieser Datenbank 402 können insbesondere auch Beschreibungen verfügbarer Hardware-Funktionen des physischen Netzadapters 110 und Informationen über eine Zuteilung der Sende-/Empfangsqueues 101-103 zu Gruppen sowie über Mengengerüste möglicher virtueller Schnittstellen pro physischem Netzadapter hinterlegt sein.

Die Queue-Steuerungseinheit reserviert bei der Einräumung des Zugriffs auf die Sende-/Empfangsqueues 101-103 jeweils verfügbare Sende-/Empfangsqueues 101-103 und Hardware- bzw. Software-Schnittstellen 501-503 für die Ablaufsteuerungskomponenten 131-133 zur Übermittlung der Datenströme. Außerdem konfiguriert die Queue-Steuerungseinheit 120 den physischen Netzadapter 110 mittels eines Konfigurationsbefehls 14 dafür, dass reservierte Sende-/Empfangsqueues an den zugeordneten virtuellen Netzadaptern der Ablaufsteuerungskomponenten mit der Priorität zur Verfügung stehen, die der jeweiligen Ablaufsteuerungskomponente zugeordnet ist. Nach erfolgreicher Konfiguration des physischen Netzadapters 110 sendet dieser eine Statusinformation 15 zur Bestätigung an die Queue-Steuerungseinheit 120 zurück.

Die Queue-Steuerungseinheit 120 teilt dem Reservierungsmodul 130 nach einer erfolgreichen Konfiguration des physischen Netzadapters jeweils mittels einer Antwortnachricht 15 für die Übermittlung der Datenströme zu verwendende virtuelle Netzadapter 121-123 und Sende-/Empfangsqueues 101-103 mit. Das Reservierungsmodul sendet diese Informationen 17 zur Bestätigung des Reservierungsauftrags 11 an die jeweilige Ablaufsteuerungskomponente 131-133. Die Ablaufsteuerungskomponenten 131-133 legen anhand der von der Bestätigung ihres jeweiligen Reservierungsauftrags 11 umfassten Informationen jeweils einen Datenstrom-Zugriffspunkt insbesondere als Socket anl und senden bzw. empfangen die Datenströme gezielt über die jeweils zu verwendenden virtuellen Netzadapter 121-123 und Sende-/Empfangsqueues 101-103. Vorzugsweise werden die virtuellen Netzadapter 121-123 zum Senden bzw. Empfangen der Datenströme den Ablaufsteuerungskomponenten 131-133 durch die Queue-Steuerungseinheit 120 bei Bedarf zugeordnet und jeweils mit einer Funktionseinheit 301-303 zur Implementierung eines Netzwerkprotokoll-Stacks der jeweiligen Ablaufsteuerungskomponente 131-133 verbunden.

## Patentansprüche

1. Verfahren zur Übermittlung zeitkritischer Daten innerhalb eines Kommunikationsnetzes, bei dem
- die zeitkritischen Daten von und/oder zu Steuerungsanwendungen übermittelt werden, die jeweils mittels zumindest einer Ablaufsteuerungskomponente (131-133) bereitgestellt werden, die in eine auf einem Host (100) installierte Ablaufsteuerungsumgebung (112) ladbar und dort ausführbar ist, wobei den Ablaufsteuerungskomponenten jeweils zumindest ein virtueller Netzadapter (121-123) zugeordnet wird,
- den virtuellen Netzadaptern durch eine Queue-Steuerungseinheit (120) dynamisch Sende-/Empfangsqueues (101-103) zumindest eines physischen Netzadapters (110) des Hosts zugeordnet werden,
- die Ablaufsteuerungskomponenten zur Reservierung von Ressourcen zum Senden und/oder Empfangen von zeitkritische Daten umfassenden Datenströmen jeweils einen Reservierungsauftrag (11) an ein der Ablaufsteuerungsumgebung zugeordnetes Reservierungsmodul (130) senden,
- das Reservierungsmodul anhand den Ablaufsteuerungskomponenten zugeordneter Dienstgüteanforderungen jeweils eine Reservierungsanfrage (12a) oder -bestätigung (12b) an den jeweiligen Datenstrom weiterleitende Kommunikationsgeräte (201-203) oder eine übergeordnete Steuerungseinheit (210) des Kommunikationsnetzes (200) zur Reservierung der Ressourcen sendet,
- das Reservierungsmodul die Queue-Steuerungseinheit veranlasst, dem virtuellen Netzadapter der jeweiligen Ablaufsteuerungskomponente entsprechend einer den Dienstgüteanforderungen zugeordneten Priorität Zugriff auf die Sende-/Empfangsqueues des physischen Netzadapters einzuräumen,
- Datenströme sendende Kommunikationsgeräte und/oder Steuerungsanwendungen zur Bekanntmachung abonnierbarer Datenströme jeweils einen Datenstrom-Identifikator umfassende erste Datagramme (12a, 20a) senden und in den ersten Datagrammen Dienstgüteanforderungen kennzeichnende Dienstgüteparameter für den jeweiligen Datenstrom spezifizieren,
- Datenströme empfangende Kommunikationsgeräte und/oder Steuerungsanwendungen zur Reservierung von durch weiterleitende Kommunikationsgeräte (201-203) für eine Übermittlung der Datenströme bereitzustellenden Ressourcen jeweils zweite Datagramme (12b, 20b) senden und in diesen den jeweiligen Datenstrom-Identifikator spezifizieren,
- die weiterleitenden Kommunikationsgeräte auf die ersten und zweiten Datagramme jeweils bei ausreichender Verfügbarkeit Ressourcen zur Übermittlung der Datenströme entsprechend den spezifizierten Dienstgüteparametern reservieren, wobei die Verfügbarkeit durch die übergeordnete Steuerungseinheit (210) des Kommunikationsnetzes (200) und/oder die weiterleitenden Kommunikationsgeräte (201-203) überprüft wird.

2. Verfahren nach Anspruch 1,
bei dem die Ablaufsteuerungskomponenten (131-133) innerhalb der Ablaufsteuerungsumgebung (112) isoliert voneinander ablaufen und gemeinsam einen Betriebssystemkern (111) des Hosts (100) nutzen, bei dem den Ablaufsteuerungskomponenten die virtuellen Netzadapter (121-123) durch die Queue-Steuerungseinheit (120) jeweils innerhalb der Ablaufsteuerungsumgebung zugeordnet werden und bei dem die Ressourcen zur Übermittlung der Datenströme bei ausreichender Verfügbarkeit in den jeweiligen weiterleitenden Kommunikationsgeräten (201-203) reserviert werden.

3. Verfahren nach Anspruch 2,
bei dem die Ablaufsteuerungskomponenten Software-Container, WebAssembly- oder Java Bytecode sind und bei dem die Ablaufsteuerungsumgebung eine Container-Laufzeitumgebung, eine WebAssembly-Laufzeitumgebung oder eine Java Virtual Machine ist.

4. Verfahren nach einem der Ansprüche 1 bis 3,
bei dem die Dienstgüteanforderungen den Ablaufsteuerungskomponenten jeweils anhand einer Klassifizierung ihrer jeweiligen Echtzeitanforderung zugeordnet werden und bei dem die Klassifizierung der Ablaufsteuerungskomponenten auf Grundlage einer Klassifizierungsrichtlinie erfolgt.

5. Verfahren nach einem der Ansprüche 1 bis 4,
bei dem das Reservierungsmodul die Reservierungsanfragen oder -bestätigungen jeweils entsprechend einem für die jeweilige Ablaufsteuerungskomponente ausgewählten Reservierungsprotokoll an die weiterleitenden Kommunikationsgeräte oder die übergeordnete Steuerungseinheit des Kommunikationsnetzes sendet.

6. Verfahren nach Anspruch 5,
bei dem das Reservierungsmodul das Reservierungsprotokoll anhand durch ein weiterleitendes Kommunikationsgerät, an das der Host angeschlossen ist, insbesondere entsprechend IEEE 802.1Q bereitgestellter Informationen und/oder anhand durch die übergeordnete Steuerungseinheit des Kommunikationsnetzes bereitgestellter Informationen auswählt.

7. Verfahren nach einem der Ansprüche 1 bis 6,
bei dem die Queue-Steuerungseinheit (120) bei einer Einräumung des Zugriffs auf die Sende-/Empfangsqueues (101-103) des physischen Netzadapters (110) Host-interne Hardware- und/oder Software-Schnittstellen (501-503) zwischen dem jeweiligen virtuellen Netzadapter (121-123) und zumindest einer ausgewählten Sende-/Empfangsqueue (101-103) freischaltet und bei dem die Queue-Steuerungseinheit bei der Einräumung des Zugriffs auf die Sende-/Empfangsqueues jeweils verfügbare Sende-/Empfangsqueues und Hardware- und/oder Software-Schnittstellen für die Ablaufsteuerungskomponenten zur Übermittlung der Datenströme reserviert.

8. Verfahren nach Anspruch 7,
bei dem die Queue-Steuerungseinheit den physischen Netzadapter konfiguriert, dass reservierte Sende-/Empfangsqueues an den zugeordneten virtuellen Netzadaptern der Ablaufsteuerungskomponenten mit der Priorität zur Verfügung stehen, die der jeweiligen Ablaufsteuerungskomponente zugeordnet ist.

9. Verfahren nach Anspruch 8,
bei dem die Queue-Steuerungseinheit (120) dem Reservierungsmodul (130) nach einer erfolgreichen Konfiguration des physischen Netzadapters (110) jeweils für die Übermittlung der Datenströme zu verwendende virtuelle Netzadapter (121-123) und Sende-/Empfangsqueues (101-103) mitteilt, bei dem das Reservierungsmodul diese Informationen (17) zur Bestätigung des Reservierungsauftrags (11) an die jeweilige Ablaufsteuerungskomponente (131-133) sendet, bei dem die Ablaufsteuerungskomponenten anhand der von der Bestätigung ihres jeweiligen Reservierungsauftrags umfassten Informationen jeweils einen Datenstrom-Zugriffspunkt insbesondere als Socket anlegen und bei dem die Ablaufsteuerungskomponenten die Datenströme gezielt über die jeweils zu verwendenden virtuellen Netzadapter und Sende-/Empfangsqueues senden und/oder empfangen.

10. Verfahren nach einem der Ansprüche 1 bis 9,
bei dem die virtuellen Netzadapter (121-123) zum Senden und/oder Empfangen der Datenströme den Ablaufsteuerungskomponenten (131-133) durch die Queue-Steuerungseinheit (120) bei Bedarf zugeordnet und jeweils mit einer Funktionseinheit (301-303) zur Implementierung eines Netzwerkprotokoll-Stacks der jeweiligen Ablaufsteuerungskomponente verbunden werden.

11. Verfahren nach einem der Ansprüche 1 bis 10,
bei dem das Reservierungsmodul die Queue-Steuerungseinheit nur bei erfolgreicher Reservierung veranlasst, dem virtuellen Netzadapter der jeweiligen Ablaufsteuerungskomponente Zugriff auf die Sende-/Empfangsqueues des physischen Netzadapters einzuräumen.

12. Verfahren nach einem der Ansprüche 1 bis 11,
bei dem die Ressourcen zur Übermittlung der Datenströme nutzbare Übertragungszeitfenster, Bandbreite, zugesicherte maximale Latenz, Queue-Anzahl, Queue-Cache und/oder Adress-Cache in Switches oder Bridges umfassen.

13. Verfahren nach Anspruch 12,
bei dem eine Weiterleitung der Datenströme innerhalb des Kommunikationsnetzes mittels Frame Preemption, insbesondere gemäß IEEE 802.1Q, mittels Time-Aware Shaper, insbesondere gemäß IEEE 802.1Q, mittels Credit-Based Shaper, insbesondere gemäß IEEE 802.1Q, mittels Burst Limiting Shaper, mittels Peristaltic Shaper und/oder mittels Priority-Based Shaper gesteuert wird.

14. System zur Durchführung eines Verfahrens nach einem der Ansprüche 1 bis 13 mit
- einer auf einem Host (100) installierten Ablaufsteuerungsumgebung (112),
- zumindest einer Ablaufsteuerungskomponente (131-133) zur Bereitstellung einer Steuerungsanwendung, wobei die Ablaufsteuerungskomponente in die Ablaufsteuerungsumgebung (112) ladbar und dort ausführbar ist,
- einer Queue-Steuerungseinheit (120),
- einem der Ablaufsteuerungsumgebung zugeordneten Reservierungsmodul (130),
- wobei das System dafür eingerichtet ist, dass zeitkritischen Daten von und/oder zu der Steuerungsanwendung übermittelt werden und dass der Ablaufsteuerungskomponente zumindest ein virtueller Netzadapter (121-123) zugeordnet wird,
- wobei die Queue-Steuerungseinheit dafür eingerichtet ist, virtuellen Netzadaptern dynamisch Sende-/Empfangsqueues (101-103) zumindest eines physischen Netzadapters (110) des Hosts zuzuordnen,
- wobei die Ablaufsteuerungskomponente dafür eingerichtet ist, zur Reservierung von Ressourcen zum Senden und/oder Empfangen von zeitkritische Daten umfassenden Datenströmen jeweils einen Reservierungsauftrag (11) an das Reservierungsmodul zu senden,
- wobei das Reservierungsmodul dafür eingerichtet ist, anhand Ablaufsteuerungskomponenten zugeordneter Dienstgüteanforderungen jeweils eine Reservierungsanfrage (12a) oder -bestätigung (12b) an den jeweiligen Datenstrom weiterleitende Kommunikationsgeräte (201-203) oder eine übergeordnete Steuerungseinheit (210) eines Kommunikationsnetzes (200) zur Reservierung der Ressourcen zu senden,
- wobei das Reservierungsmodul ferner dafür eingerichtet ist, die Queue-Steuerungseinheit zu veranlassen, dem virtuellen Netzadapter der jeweiligen Ablaufsteuerungskomponente entsprechend einer den Dienstgüteanforderungen zugeordneten Priorität Zugriff auf die Sende-/Empfangsqueues des physischen Netzadapters einzuräumen
- wobei Datenströme sendende Kommunikationsgeräte und/oder Steuerungsanwendungen dafür eingerichtet sind, zur Bekanntmachung abonnierbarer Datenströme jeweils einen Datenstrom-Identifikator umfassende erste Datagramme (12a, 20a) zu senden und in den ersten Datagrammen Dienstgüteanforderungen kennzeichnende Dienstgüteparameter für den jeweiligen Datenstrom zu spezifizieren,
- wobei Datenströme empfangende Kommunikationsgeräte und/oder Steuerungsanwendungen dafür eingerichtet sind, zur Reservierung von durch weiterleitende Kommunikationsgeräte (201-203) für eine Übermittlung der Datenströme bereitzustellenden Ressourcen jeweils zweite Datagramme (12b, 20b) zu senden und in diesen den jeweiligen Datenstrom-Identifikator zu spezifizieren,
- wobei die weiterleitenden Kommunikationsgeräte dafür eingerichtet sind, auf die ersten und zweiten Datagramme jeweils bei ausreichender Verfügbarkeit Ressourcen zur Übermittlung der Datenströme entsprechend den spezifizierten Dienstgüteparametern zu reservieren, wobei die Verfügbarkeit durch die übergeordnete Steuerungseinheit (210) des Kommunikationsnetzes (200) und/oder die weiterleitenden Kommunikationsgeräte (201-203) überprüft wird.

15. System nach Anspruch 14,
bei dem das System ein Kommunikationsnetz (200) mit mehreren Kommunikationsgeräten (201-203, 221-222) umfasst, bei dem die Ablaufsteuerungskomponenten (131-133) dafür eingerichtet sind, innerhalb der Ablaufsteuerungsumgebung (112) isoliert voneinander abzulaufen und gemeinsam einen Betriebssystemkern (111) des Hosts (110) zu nutzen, bei dem die die Queue-Steuerungseinheit (120) dafür eingerichtet ist, den Ablaufsteuerungskomponenten die virtuellen Netzadapter (121-123) jeweils innerhalb der Ablaufsteuerungsumgebung zuzuordnen und bei dem das Kommunikationsnetz dafür eingerichtet ist, die Ressourcen zur Übermittlung der Datenströme bei ausreichender Verfügbarkeit in den jeweiligen weiterleitenden Kommunikationsgeräten (201-203) zu reservieren.

## Claims

1. Method for the transmission of time-critical data within a communication network, wherein
- the time-critical data is transmitted from and/or to control applications that are each provided by means of at least one flow control component (131-133) that can be loaded into a flow control environment (112) installed on a host (100) and can be executed there, wherein a virtual network adapter (121-123) is assigned to each of the flow control components,
- dynamic transmit/receive queues (101-103) of at least one physical network adapter (110) of the host are dynamically assigned by a queue control unit (120) to the virtual network adapters,
- in order to reserve resources for sending and/or receiving time-critical data streams comprising time-critical data, the flow control components send, in each case, a reservation order (11) to a reservation module (130) assigned to the flow control environment,
- on the basis of the quality-of-service requirements assigned to the flow control components, in each case, the reservation module sends a reservation request (12a) or reservation confirmation (12b) to the communication devices (201-203) forwarding the respective data stream or to a higher-level control unit (210) of the communication network (200) for reserving the resources,
- the reservation module causes the queue control unit to grant the virtual network adapter of the respective flow control component access to the transmit/receive queues of the physical network adapter, according to a priority assigned to the quality-of-service requirements,
- communication devices and/or control applications sending data streams, each send, for notification of subscribable data streams, first datagrams (12a, 20a) comprising a data stream identifier and specify in the first datagrams quality-of-service parameters characterising quality-of-service requirements for the respective data stream,
- for reserving resources to be provided by forwarding communication devices (201-203) for a transmission of the data streams, communication devices and/or control applications receiving data streams each send second datagrams (12b, 20b) and therein specify the respective data stream identifier,
- the forwarding communication devices each reserve resources, given sufficient availability, on the first and second datagrams for transmitting the data streams according to the specified quality-of-service parameters, wherein the availability is checked by the higher-level control unit (210) of the communication network (200) and/or the forwarding communication devices (201-203).

2. Method according to claim 1,
wherein the flow control components (131-133) operate within the flow control environment (112) isolated from one another and collectively use an operating system kernel (111) of the host (100), wherein the virtual network adapters (121-123) are each assigned by the queue control unit (120) to the flow control components within the flow control environment and wherein the resources for transmitting the data streams are reserved, given sufficient availability, in the respective forwarding communication devices (201-203).

3. Method according to claim 2,
wherein the flow control components are software containers, WebAssembly or Java bytecode and wherein the flow control environment is a container runtime environment, a WebAssembly runtime environment or a Java virtual machine.

4. Method according to one of claims 1 to 3,
wherein the quality-of-service requirements are assigned to the flow control components on the basis, in each case, of a classification of their respective real-time requirements and wherein the classification of the runtime control components takes place on the basis of a classification guideline.

5. Method according to one of claims 1 to 4,
wherein the reservation module sends the reservation requests or confirmations, in each case, according to a reservation protocol selected for the respective flow control component, to the forwarding communication devices or the higher-level control unit of the communication network.

6. Method according to claim 5,
wherein the reservation module selects the reservation protocol on the basis of information provided by a forwarding communication device to which the host is connected, in particular in accordance with IEEE 802.1Q, and/or on the basis of information provided by the higher-level control unit of the communication network.

7. Method according to one of claims 1 to 6,
wherein, upon granting of the access to the transmit/receive queues (101-103) of the physical network adapter (110), the queue control unit (120) activates host-internal hardware and/or software interfaces (501-503) between the respective virtual network adapter (121-123) and at least one selected transmit/receive queue (101-103) and wherein, upon granting of the access to the transmit/receive queues, the queue control unit reserves available transmit/receive queues and hardware and/or software interfaces for the flow control components for transmitting the data streams.

8. Method according to claim 7,
wherein the queue control unit configures the physical network adapter so that reserved transmit/receive queues are available to the assigned virtual network adapters of the flow control components with the priority assigned to each respective flow control component.

9. Method according to claim 8,
wherein the queue control unit (120) notifies the reservation module (130), following a successful configuration of the physical network adapter (110), in each case, of the network adapters (121-123) and the transmit/receive queues (101-103) to be used for the transmission of the data streams, wherein the reservation module sends this information (17) as confirmation of the reservation order (11) to the respective flow control component (131-133), wherein, on the basis of the information included by the confirmation of its respective reservation order, each flow control component sets up a data stream access point, in particular as a socket, and wherein the flow control components send and/or receive the data streams in a targeted manner via the virtual network adapters and transmit/receive queues that are to be used.

10. Method according to one of claims 1 to 9,
wherein the virtual network adapters (121-123) are assigned as needed by the queue control unit (120) to the flow control components (131-133) for transmitting and/or receiving the data streams and are each connected to a functional unit (301-303) for implementing a network protocol stack of the respective flow control components.

11. Method according to one of claims 1 to 10,
wherein only following a successful reservation does the reservation module cause the queue control unit to grant the virtual network adapter of the respective flow control component access to the transmit/receive queues of the physical network adapter.

12. Method according to one of claims 1 to 11,
wherein the resources for transmitting the data streams comprise usable transfer time windows, bandwidth, assured maximum latency, queue count, queue cache and/or address cache in switches or bridges.

13. Method according to claim 12,
wherein a forwarding of the data streams within the communication network is controlled by means of frame preemption, in particular in accordance with IEEE 802.1Q, by means of time-aware shapers, in particular in accordance with IEEE 802.1Q, by means of credit-based shapers, in particular in accordance with IEEE 802.1Q, by means of burst limiting shapers, by means of peristaltic shapers and/or by means of priority-based shapers.

14. System for carrying out a method according to one of claims 1 to 13, having
- a flow control environment (112) installed on a host (100),
- at least one flow control component (131-133) for providing a control application, wherein the flow control component can be loaded into the flow control environment (112) and can be executed there,
- a queue control unit (120),
- a reservation module (130) assigned to the flow control environment,
- wherein the system is configured so that time-critical data is transmitted from and/or to the control application and so that at least one virtual network adapter (121-123) is assigned to the flow control component,
- wherein the queue control unit is configured to assign transmit/receive queues (101-103) of at least one physical network adapter (110) of the host dynamically to virtual network adapters,
- wherein the flow control component is configured, in order to reserve resources for sending and/or receiving data streams comprising time-critical data, to send a reservation order (11) to the reservation module,
- wherein on the basis of the quality-of-service requirements assigned to flow control components, in each case, the reservation module is configured to send a reservation request (12a) or reservation confirmation (12b) to the communication devices (201-203) forwarding the respective data stream or to a higher-level control unit (210) of a communication network (200) for reserving the resources,
- wherein the reservation module is further configured to cause the queue control unit to grant the virtual network adapter of the respective flow control component access to the transmit/receive queues of the physical network adapter, according to a priority assigned to the quality-of-service requirements
- wherein communication devices and/or control applications sending data streams are configured to each send, for notification of subscribable data streams, first datagrams (12a, 20a) comprising a data stream identifier and to specify, in the first datagrams, quality-of-service parameters characterising quality-of-service requirements for the respective data stream,
- wherein, for reserving resources to be provided by forwarding communication devices (201-203) for a transmission of the data streams, communication devices and/or control applications receiving data streams are configured to each send second datagrams (12b, 20b) and therein specify the respective data stream identifier,
- wherein the forwarding communication devices are configured to each reserve resources, given sufficient availability, on the first and second datagrams for transmitting the data streams according to the specified quality-of-service parameters, wherein the availability is checked by the higher-level control unit (210) of the communication network (200) and/or the forwarding communication devices (201-203).

15. System according to claim 14,
wherein the system comprises a communication network (200) having a plurality of communication devices (201-203, 221-222), wherein the flow control components (131-133) are configured to operate within the flow control environment (112) isolated from one another and collectively to use an operating system kernel (111) of the host (110), wherein the queue control unit (120) is configured to assign the virtual network adapters (121-123) to the flow control components, in each case, within the flow control environment and wherein the communication network is configured to reserve the resources for transmitting the data streams, given sufficient availability, in the respective forwarding communication devices (201-203).

## Revendications

1. Procédé de transmission de données critiques du point de vue du temps dans un réseau de communication, dans lequel
- on transmet les données critiques du point de vue du temps de et/ou à des applications de commande, que l'on met à disposition respectivement au moyen d'au moins un composant (131-133) de commande de déroulement, qui peut être chargé dans un environnement (112) de commande de déroulement installé sur un hôte (100) et y être réalisé, dans lequel on affecte aux composants de commande de déroulement respectivement au moins un adaptateur (121-123) virtuel de réseau,
- on affecte, aux adapteurs virtuels de réseau par une unité (120) de commande de queue, des queues (101-103) d'émission/réception de façon dynamique d'au moins un adaptateur (110) physique de réseau de l'hôte,
- les composants de commande de déroulement envoient, à un module (130) de réservation affecté à l'environnement de commande de déroulement, pour la réservation de ressources pour l'envoi et/ou la réception de flux de données comprenant des données critiques du point de vue du temps, respectivement un ordre (11) de réservation,
- le module de réservation envoie, pour la réservation des ressources, à l'aide d'exigences de qualité de service affectées aux composants de commande de déroulement, respectivement une demande (12a) de réservation ou une confirmation (12b) aux appareils (201-203) de communication acheminants le flux de données respectif ou à une unité (210) de commande supérieure hiérarchiquement du réseau (200) de communication,
- le module de réservation fait que l'unité de commande de queue accorde, à l'adaptateur virtuel de réseau du composant de commande de déroulement respectif, conformément à une priorité affectée aux exigences de qualité de service, accès aux queues d'émission/réception de l'adaptateur physique de réseau,
- des appareils de communication envoyant des flux de données et/ou des applications de commande envoient, pour faire connaître des flux de données pouvant être abonnés, respectivement des premiers datagrammes (12a, 20a) comprenant respectivement un identifiant de flux de données et spécifient, dans les premiers datagrammes, des paramètres de qualité de service, caractérisant les exigences de qualité de service, pour le flux de données respectif,
- des appareils de communication recevant des flux de données et/ou des applications de commande envoient, pour la réservation de ressources mises à disposition pour une transmission des flux de données par des appareils (201-203) de communication acheminants, respectivement des deuxièmes datagrammes (12b, 20b) et spécifient dans ceux-ci l'identifiant de flux de données respectif,
- les appareils de communication acheminants réservent, sur les premiers et deuxièmes datagrammes, respectivement, si la disponibilité est suffisante, des ressources pour la transmission des flux de données correspondant aux paramètres de qualité de service spécifiés, dans lequel on contrôle la disponibilité par l'unité (210) de commande supérieure hiérarchiquement du réseau (200) de communication et/ou par les appareils (201-203) de communication acheminants.

2. Procédé suivant la revendication 1,
dans lequel les composants (131-133) de commande de déroulement se déroulent de manière isolée les uns des autres dans l'environnement (112) de commande de déroulement et utilisent conjointement un noyau (111) de système de fonctionnent de l'hôte (100), dans lequel on affecte respectivement, à l'intérieur de l'environnement de commande de déroulement, aux composants de commande de déroulement, l'adaptateur (121-123) virtuel de réseau par l'unité (120) de commande de queue et dans lequel on réserve les ressources pour la transmission des flux de données, si la disponibilité est suffisante, dans les appareils (201-203) de communication acheminants respectifs.

3. Procédé suivant la revendication 2,
dans lequel les composants de commande de déroulement sont des conteneurs logiciels, des codes d'octets web assembly ou java et dans lequel l'environnement de commande de déroulement est un environnement de temps d'exécution de conteneurs, un environnement de temps d'exécution de web assembly ou une machine java virtual.

4. Procédé suivant l'une des revendications 1 à 3,
dans lequel on affecte les exigences de qualité de service aux composants de commande de déroulement respectivement à l'aide d'un classement de leurs exigences respectives en temps réel et dans lequel le classement des composants de commande de déroulement s'effectue sur la base d'une directive de classement.

5. Procédé suivant l'une des revendications 1 à 4,
dans lequel le module de réservation envoie, aux appareils de communication acheminants ou à l'unité de commande supérieure hiérarchiquement du réseau de communication, les demandes de réservation ou les confirmations de réservation respectivement conformément à un protocole de réservation sélectionné pour les composants de commande de déroulement respectifs.

6. Procédé suivant la revendication 5,
dans lequel le module de réservation sélectionne le protocole de réservation à l'aide d'informations mises à disposition par un appareil de communication acheminants auquel l'hôte est raccordé, en particulier conformément à IEEE 802.10 et/ou à l'aide des informations mises à disposition par l'unité de commande supérieure hiérarchiquement du réseau de communication.

7. Procédé suivant l'une des revendications 1 à 6,
dans lequel l'unité (120) de commande de queue déconnecte, lors d'une admission de l'accès aux queues (101-103) d'émission/réception de l'adaptateur (110) physique de réseau, des interfaces (501-503) internes à l'hôte en matériel et/ou en logiciel entre l'adaptateur (121-123) virtuel de réseau et au moins une queue (101-103) d'émission/réception sélectionnée et dans lequel le dispositif de commande de queue réserve, pour la transmission des flux de données lors de l'admission de l'accès aux queues d'émission/réception, respectivement des queues d'émission/réception disponibles et des interfaces en matériel et/ou en logiciel pour les composants de commande de déroulement.

8. Procédé suivant la revendication 7,
dans lequel l'unité de commande de queue configure l'adaptateur physique de réseau, en ce que des queues d'émission/réception réservées sont disponibles sur les adaptateurs virtuels de réseau affectés des composants de commande de déroulement avec la priorité, qui est affectée aux composants de commande de déroulement respectifs.

9. Procédé suivant la revendication 8,
dans lequel l'unité (120) de commande de queue fait part au module (130) de réservation, après une configuration couronnée de succès de l'adaptateur (110) physique de réseau, des adaptateurs (121-123) virtuels de réseau à utiliser pour la transmission des flux de données et des queues (101-103) d'émission/réception, dans lequel le module de réservation envoie ces informations (17) pour la confirmation de l'ordre (11) de réservation aux composants (131-133) respectifs de commande de déroulement, dans lequel les composants de commande de déroulement mettent respectivement un point d'accès de flux de données, en particulier comme socket, à l'aide des informations contenues dans la confirmation de leur ordre de réservation respectif et dans lequel les composants de commande de déroulement envoient et/ou reçoivent les flux de données de manière ciblée par les adaptateurs virtuels de réseau à utiliser respectivement et les queues d'émission/réception.

10. Procédé suivant l'une des revendications 1 à 9,
dans lequel les adaptateurs (121-123) virtuels de réseau sont affectés en cas de besoin pour l'émission et/ou la réception des flux de données aux composants (131-133) de commande de déroulement par l'unité (120) de commande de queue et sont raccordés respectivement à une unité (301-303) fonctionnelle de mise en œuvre d'un stade de protocole de réseau des composants respectifs.

11. Procédé suivant l'une des revendications 1 à 10,
dans lequel le module de réservation fait que l'unité de commande de queue ne donne, à l'adaptateur virtuel de réseau du composant de commande de déroulement respectif, accès aux queues d'émission/réception de l'adaptateur physique de réseau, que si la réservation est couronnée de succès.

12. Procédé suivant l'une des revendications 1 à 11,
dans lequel les ressources pour la transmission des flux de données comprennent des créneaux temporels de transmission utilisables, des largeurs de bandes, des latences maximum sécurisées, un nombre de queues, des caches de queue et/ou des caches d'adresse dans des switches ou des bridges.

13. Procédé suivant la revendication 12,
dans lequel on commande l'acheminement des flux de données dans le réseau de communication au moyen d'une frame preemption, en particulier suivant IEEE 802.1Q, au moyen d'un time aware shaper, en particulier suivant IEEE 802.10, au moyen d'un credit based shaper, en particulier suivant IEEE 802.10, au moyen d'un burst limited shaper, au moyen d'un peristaltic shaper et/ou au moyen d'un priority based shaper.

14. Système pour effectuer un procédé suivant l'une des revendications 1 à 13, comprenant
- un environnement (112) de commande de déroulement installé sur un hôte (100),
- au moins un composant (131-133) de commande de déroulement pour disposer d'une application de commande, dans lequel le composant de commande de déroulement peut être chargé dans l'environnement (112) de commande de déroulement et y être réalisé,
- une unité (120) de commande de queue,
- un module (130) de réservation affecté à l'environnement de commande de déroulement,
- dans lequel le système est agencé pour transmettre des données critiques du point de vue du temps, de et/ou à l'application de commande, et en ce qu'au moins un adaptateur (121-123) virtuel de réseau est affecté aux composants de commande de déroulement,
- dans lequel l'unité de commande de queue est agencée pour affecter à des adaptateurs virtuels du réseau de manière dynamique des queues (101-103) d'émission/réception d'au moins un adaptateur (110) physique de réseau de l'hôte,
- dans lequel le composant de commande de déroulement est agencé pour envoyer au module de réservation respectivement un ordre (11) de réservation pour la réservation de ressources pour l'envoi et/ou la réception de flux de données comprenant des données critiques du point de vue du temps,
- dans lequel le module de réservation est agencé, pour la réservation des ressources, pour envoyer, à l'aide d'exigences de qualité de service affectées aux composants de commande de déroulement, respectivement une demande (12a) de réservation ou une confirmation (12b) aux appareils (201-203) de communication acheminants le flux de données respectif ou à une unité (210) de commande supérieure hiérarchiquement du réseau (200) de communication,
- dans lequel le module de réservation est agencé en outre pour faire que l'unité de commande de queue accorde à l'adaptateur virtuel de réseau du composant de commande de déroulement respectif, conformément à une priorité affectée aux exigences de qualité de service, accès aux queues d'émission/réception de l'adaptateur physique de réseau,
- dans lequel des appareils de communication envoyant des flux de données et/ou des applications de commande envoient, pour faire connaître des flux de données pouvant être abonnés, respectivement des premiers datagrammes (12a, 20a) comprenant respectivement un identifiant de flux de données et spécifient, dans les premiers datagrammes, des paramètres de qualité de service, caractérisant les exigences de qualité de service, pour le flux de données respectif,
- dans lequel des appareils de communication recevant des flux de données et/ou des applications de commandes sont agencés pour envoyer, pour la réservation de ressources à mettre à disposition par des appareils (201-203) de communication acheminants pour une transmission des flux de données, respectivement des deuxièmes datagrammes (12b, 20b) et pour spécifier dans ceux-ci l'identifiant respectif de flux de données,
- dans lequel les appareils de communication acheminants sont agencés pour réserver , sur les premiers et deuxièmes datagrammes, respectivement si la disponibilité est suffisante, des ressources pour la transmission des flux de données correspondant aux paramètres de qualité de service spécifiés, dans lequel on contrôle la disponibilité par l'unité (210) de commande supérieure hiérarchiquement du réseau (200) de communication et/ou par les appareils (201-203) de communication acheminants.

15. Système suivant la revendication 14,
dans lequel le système comprend un réseau (200) de communication ayant plusieurs appareils (201-203, 221-222) de communication, dans lequel les composants (131-133) de commande de déroulement sont agencés pour se dérouler d'une manière isolée les uns des autres dans l'environnement (112) de commande de déroulement et pour utiliser conjointement un noyau (111) de système de fonctionnement de l'hôte (110), dans lequel l'unité (120) de commande est agencée pour affecter, aux composants de commande de déroulement, les adaptateurs (121-123) virtuels de réseau respectivement à l'intérieur de l'environnement de commande de déroulement et dans lequel le réseau de communication est agencé pour réserver les ressources pour la transmission des flux de données, si la disponibilité est suffisante dans les appareils (201-203) de communication acheminants respectifs.
